# EUROPEAN PATENT SPECIFICATION

(11) **EP 1 477 892 B1**
(45) Date of publication and mention of the grant of the patent: **23.12.2015**
(21) Application number: 03078284.1
(22) Date of filing: 17.10.2003
(51) Int. Cl.: G06F 9/44

(54) **System, method, computer program product and article of manufacture for inputting data in a computer system**
System, Verfahren, Computerprogrammprodukt und Herstellungsartikel zur Dateneingabe in ein Computersystem
Système, procédé, programme informatique et article de fabrication pour entrer des données dans un système informatique

(30) Priority: 16.05.2003 EP 03011204
(43) Date of publication of application: 17.11.2004
(73) Proprietor: SAP SE, 69190 Walldorf (DE)
(72) Inventor: Hatscher, Michael, 49080 Osnabrück (DE); Beringer, Joerg, 60431 Franktfurt (DE)
(74) Representative: Müller-Boré & Partner Patentanwälte PartG mbB

(56) References cited:
- EP-A- 0 982 669
- US-A- 6 014 138
- Koos Boertjens: "PC combicursus Microsoft Office Pro 95 : Windows 95, Word 7, Excel 7, PowerPoint 7, Access 7 : NL versie", 31 December 1996 (1996-12-31), Academic Service, Schoonhoven - The Netherlands ISBN: 9039504636 * page 99 - page 103 * * figure 4.8 *

## Description

The invention relates to a computer system, a method for assigning an attribute value to an object in a computer system, a computer program product and an article of manufacture.

In the art, a computer system is known which, when running a computer program, has a user interface via which a user can assign attribute values to attributes of an object. For example, the object may be an item in a database to which keywords can be assigned, which can be helpful when searching in the database. In this prior-art system, an object identification (its name) is presented in a graphical program interface of the running program. The graphical program interface has a control via which the user can activate a 'modal pop-up menu' to assign suitable attribute values to the object. The modal pop-up menu is a second program interface provided with controls via which the user can assign the values to the object in the program interface of the running program.

However, a draw-back of this prior art computer system is that the modal pop-up menu prohibits the user to access the running program via the graphical program interface. Thus, when during the assigning of values, the user for instance wants to see what values are already assigned to the attributes of the object, the pop-up menu has to be closed. Furthermore, the pop-up menu can obscure parts of the graphical interface of the running program and may for example obscure the object identification. Thus, the prior art computer system is inconvenient to the user.

EP-A-0 982 669 relates to a computer operated apparatus for generating a visual information system. A virtual world associated with an application is built using building blocks such as scenes, data sources, global parameters, and resources, a scene being a visual display of information much like a presentation slide, except that the information may be linked to data stored in a database or other data storage systems. Within a scene, values resulting from a data source are represented graphically as user-defined data elements. Data sources are built with a block diagramming tool which generates one or more database queries. The queries may be SQL queries. Scenes are created with a drawing editor which transparently binds data sources to the graphical elements of the scenes. When the virtual world is completed, an execution image of the virtual world may be represented as byte code. The byte code representing the virtual world may be executed by a runtime control to provide desired information to users.

Document K. Boertjens "PC combicursus Microsoft Office Pro 95NL", 1996, Academic Service, Schoonhoven, The Netherlands relates to a combination course for use of MS Office pro software such as Word, Excel, Power Point, etc and in particular to aspects of text editing using Word 7.

It is a goal of the invention to provide a computer system with an increased ease of use. Therefore, in accordance with the invention, a computer system is provided according to claim 1.

Such a computer system has an increased ease of use because the graphical program interface comprises a current attribute values interface in which attribute values assigned to the object are shown, and an assignable attribute values interface in which a limited vocabulary of possible values of at least one of the attributes are shown. Thus, a user can perceive simultaneously both the information about the attribute values already assigned and the possible (additional) values which may be assigned. Furthermore, the current attribute value interface and the assignable attribute value interface are part of the graphical program interface. Use of the graphical program interface of the running program while the attribute value interfaces are open is therefore not inhibited. Also, the current attribute value interface and/or the assignable attribute value interface are part of the graphical program interface and, using a suitable design of the graphical program interface, it can therefore be prevented that parts of the graphical program interface are obscured.

The invention further provides a method according to claim 4. The invention also provides a computer program product according to claim 5 and an article of manufacture according to claim 6.

Specific embodiments of the invention are set forth in the dependent claims. Further details, aspects and embodiments of the invention are depicted, by way of example only, in the attached drawings and will be described with reference to the drawings.
Fig. 1 schematically shows an example of an embodiment of a computer system according to the invention.
Fig. 2 schematically shows an example of an embodiment of a user interface suitable for use in the example of fig. 1.

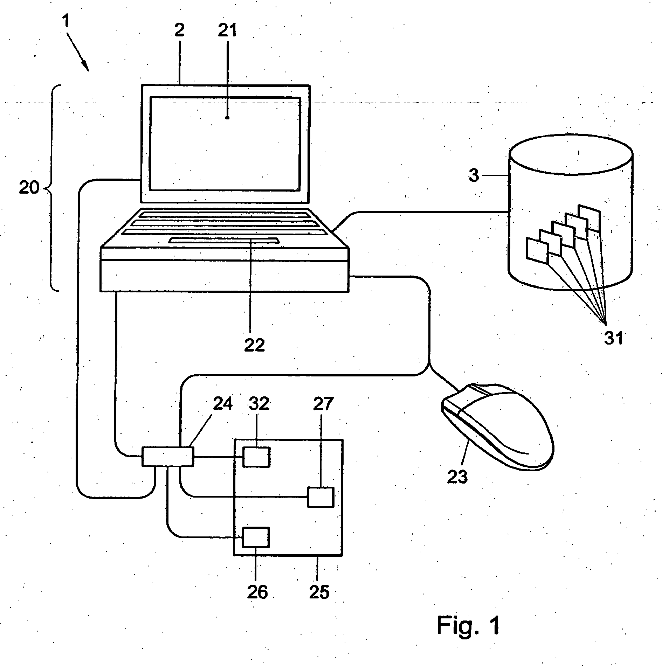

In fig. 1 a computer system 1 is shown which comprises a computer device 2 and a database 3. In the database objects or items 31 are stored. The objects 31 may for example be documents in a knowledge base describing certain know-how or otherwise. Likewise, in the database 3 items may be stored which, for example, comprise information about persons working in a company, available rooms or otherwise. In the example of fig. 1, the database 3 lies outside the computer device 2 and is communicatively connected to the computer device 2, but the database may likewise be positioned inside the computer device 2.

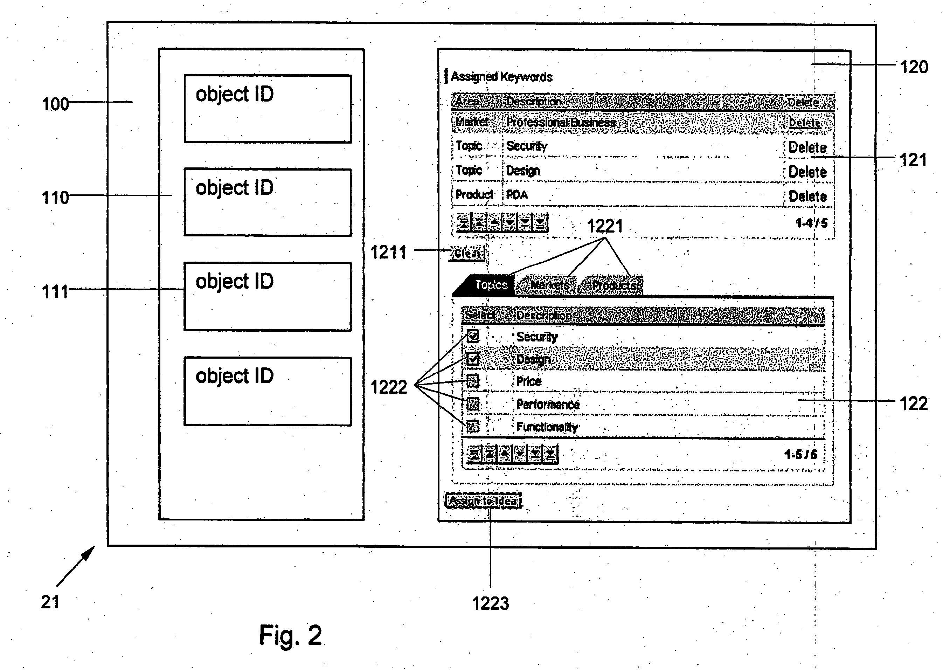

Referring to figs. 1 and 2, the computer device 2 is provided with a user interface (UI) 20, which in this example comprises an output interface, e.g. a display 21. The display 21 is also referred to as a graphical user interface (GUI). Data can be outputted in a human-perceivable form at the output interface. In this example, the data can be outputted visually. The user interface 20 further comprises an input interface, e.g. a keyboard 22 and a mouse 23, through which the user can input data into the computer device 2.

Both the output interface and the input interface may comprise other components than those depicted in fig. 1, such as for example an electronic writing pad, acoustic output or input devices or otherwise. Furthermore, the input and output interface may at least partially be integrated in the same device, such as in a touch screen or otherwise.

In the example computer system of fig. 1, actions performed by a user by means of the keyboard 22 and mouse 23 are graphically represented at the display 21 (the GUI) by the computer system 1. Thus, in this example, when actions are said to be performed by a user at the GUI, the actions are performed by means of the keyboard 22 and mouse 23, but graphically represented at the GUI. However, it is likewise possible to combine the GUI and the input interface, for example as a touch-screen or otherwise. In a combined GUI and input interface actions said to be performed by a user at the GUI are both represented and performed at the GUI.

The computer system 2 further comprises a processor 24 which is communicatively connected to the display 21, the keyboard 22, the mouse 23 and a memory 25, as is indicated with the lines in fig. 1. The processor 24 is, inter alia, arranged to handle input from the input interface, and to provide the display 21 with data which is to be outputted. The processor 24 may be arranged to perform other operations as well, such as routing data received or outputted to other devices, manipulating data or otherwise.

A computer program may be run on the computer system 1. For example, the computer program may be a program for storing, categorising and/or ordering items in the database 3 or may, for example, be a web-browser program which allows access to resources, such as applications, data and services of a computerised enterprise management system, such as is sold by SAP AG of Walldorf, Germany or otherwise.

When the computer program is run on the computer system 1, the processor 24 performs instructions according to program code stored in the memory 25. As shown in fig. 2, a graphical program interface 100 is visually outputted at the display 21 when the computer program is running. The graphical program interface 100 is a graphical representation of (a part of) the computer program running on the computer system 2.

In this example the graphical program interface 100 comprises an object listing interface 110 in which names (the object ID) of one or more of the objects 31 present in the database 3 are listed in object ID fields 111. For example, the objects may be files stored electronically in the database 3 and the object ID may be the name of a file. The object listing may for example be retrieved by the processor 24 from an index 32 of the database 3. In this example, the index 32 is stored in the memory 25 and can be displayed in the graphical program interface 100. The object listing interface 110 is provided with select controls via which a user can select an object ID field 111. The select controls may for example be integrated in the object ID fields 111 as hyperlinks. In such case, a user can retrieve the document corresponding to the object ID from the database by clicking on a hyperlink.

The graphical program interface 100 further comprises an attribute interface 120. The attribute interface 120 has a current attribute values interface 121 and an assignable attribute values interface 122. In the current attribute values interface 121 the values of the attributes assigned to one or more of the objects 31 are displayed. In the assignable attribute value interface 122, possible values which can be given to attributes of an object are displayed.

In this example, the processor 24 receives an activation signal when the user selects one or more object ID fields in the object listing interface 110. The processor 24 retrieves an attribute list 26 from the memory 25 in response to the activation signal. The attribute list 26 comprises attributes of the object(s) 31 corresponding to the selected object ID field(s). The processor 24 also retrieves from the memory 25 one or more value lists 27 which contain possible values for the different attributes. The processor 24 outputs the different attributes and possible values in the assignable attribute value interface 122. The processor 24 further determines the current attribute values of the object(s) corresponding to the selected object ID field(s) and outputs the current or assigned attribute values in the current attribute values interface 121.

In fig. 2, for example, the attributes displayed in the attribute value interfaces 121, 122 are different aspects of a text document which is stored in the database 3 and corresponds to the object ID. The attribute values are keywords that can be used to describe the different aspects of said text document. In fig. 2, assigned keywords for different aspects of the text document are shown in the current attribute values interface 121. In this example, the aspects of the document are the market to which the document relates (professional business), the topic of the text (security and design thereof ) and the product to which the text relates (a personal digital assistant).

The object attributes may already be provided with values, or values of the object attributes may yet not have been set. In the latter case, a value may be set automatically by the processor 24 when retrieving the object listing. For instance, in the example keywords may initially be assigned automatically to a given text document through the retrieval and classification engine traded under the name TREX by SAP AG of Walldorf, Germany or otherwise. The user may then refine those intitial system proposals using a limited vocabulary of assignable keywords which is shown in the assignable attribute value interface 122.

The assignable attribute values interface 122 has controls via which a value can be assigned to one or more attributes of the selected object. In the example of fig. 2, the assignable attribute values interface 122 is provided with attribute type select controls 1221 via which a user can select a certain type of attribute. In response to the selection of an attribute type, the values of the selected attribute type which can be assigned to the object are shown in a field in the assignable attribute values interface 122. By selecting a desired attribute type, the user can thus be presented only values related to that attribute type and that make sense to be assigned to this object. The processor checks the object against the possible values and filters all those values that don't make sense in this context.

For example in fig. 2, the 'topics' attribute is selected. The values for the 'topics' attribute are shown in the assignable attribute values interface 122. These values are: "security", "design", "price", "performance" and "functionality". The user can select one or more of the possible values via value select controls 1222 and assign the values to the selected object via a value assign control 1223.

The current attribute values interface 121 is further provided with a value clear control 1211. Via the value clear control 1211 the user can clear the current value(s) of a selected attribute. For example in fig. 2, the 'market' attribute is selected and the assigned value(s) can thus be cleared via the clear control 1211. Once a value is assigned to an attribute of an object or the value is cleared, the result is stored in the computer system, for example in object fields in the database 30 or otherwise.

A computer system according to the invention is especially suited, for example, for selecting values out of a set of controlled vocabularies that are more or less flat or grouped lists but not deep hierarchies, because such vocabularies can be shown in a non-complex arrangement, as shown in fig. 2. In the interface of fig. 2, values for different attributes, e.g. keywords or topics from different sub-vocabularies can be inspected and selected while keeping an overview of what items are selected. Furthermore, the attribute interface 120 provides immediate feedback to a user about the current set of selected attribute values.

The computational aspects described here can be implemented in digital electronic circuitry, or in computer hardware, firmware, software, or in combinations of them. Where appropriate, aspects of these systems and techniques can be implemented in a computer program product tangibly embodied in a machine-readable storage device for execution by a programmable processor, and method steps can be performed by a programmable processor executing a program of instructions to perform functions by operating on input data and generating output..

The invention may also be implemented in an article of manufacture with a computer usable medium having computer readable instructions embodied therein for providing access to resources available on that computer, the computer readable instructions comprising instructions to cause the computer to perform the steps of a method according to the invention. The invention may also be implemented as a computer program for running on a computer system, at least including code portions for performing steps of a method according to the invention when run on a computer system or enabling a general-propose computer system to perform functions of a filter device according to the invention. Such a computer program may be provided on a data carrier, such as a CD-ROM or diskette, stored with data loadable in a memory of a computer system, the data representing the computer program. The data carrier may further be a data connection, such as a telephone cable or a wireless connection transmitting signals representing a computer program according to the invention.

It should be noted that the above-mentioned embodiments illustrate rather than limit the invention, and that those skilled in the art will be able to design alternatives without departing from the scope of the appended claims. For example, in fig. 1 the database 3 is depicted outside the computer device 2, but the database may likewise be present inside the computer device. Also, the computer device 2 and/or the database 3 may be connected to other devices or systems. Furthermore, the computer device may be any device suitable to run a computer program, such as for example a general-purpose computer, a personal digital assistant, or otherwise. In the claims, any reference signs placed between parentheses shall not be construed as limiting the claim. The word 'comprising' does not exclude the presence of other elements or steps than those listed in a claim.

## Claims

1. A computer system (1) comprising a user interface (20), the user interface (20) comprising
a display device (21) arranged for displaying a graphical program interface (100), said graphical program interface (100) comprising at least one assign control (1223) for assigning at least one attribute value to an attribute of an object, wherein for each attribute of each object no attribute value has been set, at least one attribute value is automatically set, which graphical program interface (100) further comprises:
a current attribute values interface (121) in which attribute values assigned to the object are displayed; and
an assignable attribute values interface (122) in which possible values of at least one of the attributes are shown;
wherein the attribute values are keywords that can be used to describe different aspects of the object;
of which current attribute values interface (121) and assignable attribute values interface (122) at least one comprises a value select control (1222) for selecting at least one of the possible values and assigning this selected value to the object attribute,
wherein the assignable attribute values interface (122) comprises an attribute type select control (1221) via which a user can select a certain type of attribute, and wherein in response to the selection of the type of attribute, the values of the selected attribute type which can be assigned to the object are shown in a field in the assignable attribute values interface (122),
wherein a user can perceive simultaneously both the information about the attribute values already assigned as shown in the current attribute values interface (121) and the possible values which can be assigned in the assignable attribute values interface (122); and
wherein the assignable attribute values interface (122) further comprises a value clear control (1211) via which the user can clear assigned attribute values of a selected object attribute.

2. A computer system (1) as claimed in claim 1, wherein the graphical program interface (100) further comprises:
an object listing interface (110) with at least one object identifier (111) and at least one select control arranged for selecting at least one object; and wherein the current attribute values interface (121) is arranged for displaying at least one value assigned to at least one attribute of the selected object; and
the assignable attribute values interface (122) is arranged for displaying possible values of at leat one selected type of the attributes of the selected object.

3. A computer system (1) as claimed in any claim 2, wherein the computer system (1) is arranged for automatically assigning at least one value to an attribute of an object in response to selecting that object.

4. A method for assigning an attribute value to an object in a computer system (1), comprising:
displaying at a display device (21) a graphical program interface (100) with at least one assign control (1223) for assigning at least one attribute to an object, wherein for each attribute of each object no attribute value has been set, at least one attribute value is automatically set,
providing the graphical program interface (100) with a current attribute values interface (121) in which attribute values assigned to the object are shown and an assignable attribute values interface (122) in which possible values of at least one of the attributes are shown, wherein the attribute values are keywords that can be used to describe different aspects of the object,
selecting from at least one of the possible values and assigning this selected value to the object attribute,
selecting a certain type of attribute, wherein in response to the selection of the type of attribute, the values of the selected attribute type which can be assigned to the object are shown in a field in the assignable attribute values interface (122); and
providing a value clear control (1211) via which assigned attribute values of a selected object attribute can be cleared.

5. A computer program product, comprising program code portions for performing steps of a method as claimed in claim 4 when run on a programmable apparatus.

6. An article of manufacture with a computer-usable medium having computer-readable instructions embodied therein for providing access to resources available on that computer, the computer-readable instructions comprising instructions to cause the computer to perform the steps of a method as claimed in claim 4.

## Patentansprüche

1. Computersystem (1), das eine Benutzerschnittstelle (20) umfasst, wobei die Benutzerschnittstelle (20) umfasst:
eine Anzeigevorrichtung (21), die für die Anzeige einer graphischen Programmschnittstelle (100) eingerichtet ist, wobei die graphische Programschnittstelle (100) wenigstens eine Zuweisungssteuerung (1223) zum Zuweisen wenigstens eines Attributwerts an ein Attribut eines Objekts umfasst, wobei für jedes Attribut jedes Objekts, für das kein Attributwert festgelegt wurde, wenigstens ein Attributwert automatisch festgelegt wird, wobei die graphische Programmschnittstelle (100) ferner umfasst:
eine Schnittstelle (121) für aktuelle Attributwerte, an der dem Objekt zugewiesene Attributwerte angezeigt werden; und
eine Schnittstelle (122) für zuweisbare Attributwerte, an der mögliche Werte wenigstens eines der Attribute gezeigt werden;
wobei die Attributwerte Schlüsselwörter sind, die verwendet werden können, um verschiedene Aspekte des Objekts zu beschreiben;
wobei die Schnittstelle (121) für aktuelle Attributwerte und/oder die Schnittstelle (122) für zuweisbare Attributwerte eine Wertauswahlsteuerung (1222) umfasst/en, um wenigstens einen der möglichen Werte auszuwählen und diesen ausgewählten Wert an das Objektattribut zuzuweisen,
wobei die Schnittstelle (122) für zuweisbare Attributwerte eine Auswahlsteuerung (1221) für den Attributtyp umfasst, über welche ein Benutzer einen gewissen Attributtyp auswählen kann, und wobei ansprechend auf die Auswahl des Attributtyps die Werte des ausgewählten Attributtyps, die dem Objekt zugewiesen werden können, in einem Feld auf der Schnittstelle (122) für zuweisbare Attributwerte gezeigt werden,
wobei ein Benutzer gleichzeitig sowohl die Information über die bereits zugewiesenen Attributwerte, wie auf der Schnittstelle (121) für aktuelle Attributwerte gezeigt, und die möglichen Werte, die an der Schnittstelle (122) für zuweisbare Attributwerte zugewiesen werden können, wahrnehmen kann; und
wobei die Schnittstelle (122) für zuweisbare Attributwerte ferner eine Wertlöschsteuerung (1211) umfasst, über die der Benutzer zugewiesene Attributwerte eines ausgewählten Objektattributs löschen kann.

2. Computersystem (1) nach Anspruch 1, wobei die graphische Programmschnittstelle (100) ferner umfasst:
eine Objektauflistungsschnittstelle (110) mit wenigstens einer Objektkennung (111) und wenigstens einer Auswahlsteuerung, die eingerichtet ist, um wenigstens ein Objekt auszuwählen; und wobei die Schnittstelle (121) für aktuelle Attributwerte eingerichtet ist, um wenigstens einen Wert, der wenigstens einem Attribut des ausgewählten Objekts zugewiesen ist, anzuzeigen; und
die Schnittstelle (122) für zuweisbare Attributwerte eingerichtet ist, um mögliche Werte wenigstens eines ausgewählten Typs der Attribute des ausgewählten Objekts anzuzeigen.

3. Computersystem (1) nach Anspruch 2, wobei das Computersystem (1) eingerichtet ist, um ansprechend auf die Auswahl eines Objekts wenigstens einen Wert an ein Attribut dieses Objekts zuzuweisen.

4. Verfahren zum Zuweisen eines Attributwerts an ein Objekt in einem Computersystem (1), das umfasst:
Anzeigen einer graphischen Programmschnittstelle (100) mit wenigstens einer Zuweisungssteuerung (1223) zum Zuweisen wenigstens eines Attributs an ein Objekt, wobei für jedes Attribut jedes Objekts, für das kein Attributwert festgelegt wurde, wenigstens ein Attributwert automatisch festgelegt wird, an einer Anzeigevorrichtung (21),
Versehen der graphischen Programmschnittstelle (100) mit einer Schnittstelle (121) für aktuelle Attributwerte, an der dem Objekt zugewiesene Attributwerte angezeigt werden, und einer Schnittstelle (122) für zuweisbare Attributwerte, an der mögliche Werte wenigstens eines der Attribute gezeigt werden, wobei die Attributwerte Schlüsselwörter sind, die verwendet werden können, um verschiedene Aspekte des Objekts zu beschreiben,
Auswählen aus dem wenigstens einen der möglichen Werte und Zuweisen dieses ausgewählten Werts an das Objektattribut,
Auswählen eines gewissen Attributtyps, wobei ansprechend auf die Auswahl des Attributtyps die Werte des ausgewählten Attributtyps, die dem Objekt zugewiesen werden können, in einem Feld auf der Schnittstelle (122) für zuweisbare Attributwerte gezeigt werden; und
Bereitstellen einer Wertlöschsteuerung (1211), über die zugewiesene Attributwerte eines ausgewählten Objektattributs gelöscht werden können.

5. Computerprogrammprodukt, das Programmcodeabschnitte zum Durchführen von Schritten eines Verfahrens nach Anspruch 4 umfasst, wenn es auf einer programmierbaren Vorrichtung laufen gelassen wird.

6. Herstellungsartikel mit einem computernutzbaren Medium mit darin ausgeführten computerlesbaren Anweisungen, um den Zugriff auf Ressourcen bereitzustellen, die auf diesem Computer verfügbar sind, wobei die computerlesbaren Anweisungen Anweisungen umfassen, um zu bewirken, dass der Computer die Schritte eines Verfahrens nach Anspruch 4 durchführt.

## Revendications

1. Système informatique (1) comprenant une interface utilisateur (20), l'interface utilisateur (20) comprenant
un dispositif d'affichage (21) agencé pour afficher une interface de programme graphique (100), ladite interface de programme graphique (100) comprenant au moins une commande d'attribution (1223) pour attribuer au moins une valeur d'attribut à un attribut d'un objet, dans lequel pour chaque attribut de chaque objet auquel aucune valeur d'attribut n'a été définie, au moins une valeur d'attribut est automatiquement définie, laquelle interface de programme graphique (100) comprend en outre :
une interface de valeurs d'attribut actuelles (121) dans laquelle des valeurs d'attribut attribuées à l'objet sont affichées ; et
une interface de valeurs d'attribut attribuables (122) dans laquelle des valeurs possibles d'au moins un des attributs sont illustrées ;
dans lequel les valeurs d'attribut sont des mots clés qui peuvent être utilisés pour décrire différents aspects de l'objet ;
parmi lesquelles interface de valeurs d'attribut actuelles (121) et interface de valeurs d'attribut attribuables (122), au moins une comprend une commande de sélection de valeur (1222) pour sélectionner au moins une des valeurs possibles et attribuer cette valeur sélectionnée à l'attribut d'objet,
dans lequel l'interface de valeurs d'attribut attribuables (122) comprend une commande de sélection de type d'attribut (1221) par le biais de laquelle un utilisateur peut sélectionner un certain type d'attribut, et dans lequel en réponse à la sélection du type d'attribut, les valeurs du type d'attribut sélectionné qui peuvent être attribuées à l'objet sont illustrées dans un champ dans l'interface de valeurs d'attribut attribuables (122),
dans lequel un utilisateur peut percevoir simultanément à la fois les informations concernant les valeurs d'attribut déjà attribuées telles qu'illustrées dans l'interface de valeurs d'attribut actuelles (121) et les valeurs possibles qui peuvent être attribuées dans l'interface de valeurs d'attribut attribuables (122) ; et
dans lequel l'interface de valeurs d'attribut attribuables (122) comprend en outre une commande d'effacement de valeur (1211) par le biais de laquelle l'utilisateur peut effacer des valeurs d'attribut attribuées d'un attribut d'objet sélectionné.

2. Système informatique (1) selon la revendication 1, dans lequel l'interface de programme graphique (100) comprend en outre :
une interface d'énumération d'objets (110) avec au moins un identifiant d'objet (111) et au moins une commande de sélection agencée pour sélectionner au moins un objet ; et dans lequel l'interface de valeurs d'attribut actuelles (121) est agencée pour afficher au moins une valeur attribuée à au moins un attribut de l'objet sélectionné ; et
l'interface de valeurs d'attribut attribuables (122) est agencée pour afficher des valeurs possibles d'au moins un type sélectionné des attributs de l'objet sélectionné.

3. Système informatique (1) selon la revendication 2, dans lequel le système informatique (1) est agencé pour attribuer automatiquement au moins une valeur à un attribut d'un objet en réponse à la sélection de cet objet.

4. Procédé d'attribution d'une valeur d'attribut à un objet dans un système informatique (1), comprenant :
afficher au niveau d'un dispositif d'affichage (21) une interface de programme graphique (100) avec au moins une commande d'attribution (1223) pour attribuer au moins un attribut à un objet, dans lequel pour chaque attribut de chaque objet auquel aucune valeur d'attribut n'a été définie, au moins une valeur d'attribut est automatiquement définie,
pourvoir l'interface de programme graphique (100) d'une interface de valeurs d'attribut actuelles (121) dans laquelle des valeurs d'attribut attribuées à l'objet sont illustrées et d'une interface de valeurs d'attribut attribuables (122) dans laquelle des valeurs possibles d'au moins un des attributs sont illustrées, dans lequel les valeurs d'attribut sont des mots clés qui peuvent être utilisés pour décrire différents aspects de l'objet,
sélectionner parmi au moins une des valeurs possibles et attribuer cette valeur sélectionnée à l'attribut d'objet,
sélectionner un certain type d'attribut, dans lequel en réponse à la sélection du type d'attribut, les valeurs du type d'attribut sélectionné qui peuvent être attribuées à l'objet sont illustrées dans un champ dans l'interface de valeurs d'attribut attribuables (122) ; et
fournir une commande d'effacement de valeur (1211) par le biais de laquelle des valeurs d'attribut attribuées d'un attribut d'objet sélectionné peuvent être effacées.

5. Produit de programme informatique comprenant des portions de code de programme pour réaliser des étapes d'un procédé selon la revendication 4 lors de l'exécution sur un appareil programmable.

6. Article de fabrication avec un support utilisable par ordinateur ayant des instructions lisibles par ordinateur mises en oeuvre en son sein pour fournir un accès à des ressources disponibles sur cet ordinateur, les instructions lisibles par ordinateur comprenant des instructions pour amener l'ordinateur à réaliser les étapes d'un procédé selon la revendication 4.
